# EUROPÄISCHE PATENTSCHRIFT

(11) **EP 3 322 321 B1**
(45) Veröffentlichungstag und Bekanntmachung des Hinweises auf die Patenterteilung: **28.08.2019**
(21) Anmeldenummer: 16703447.9
(22) Anmeldetag: 25.01.2016
(51) Int. Cl.: A47J 31/44

(54) **MILCHAUFSCHÄUMVORRICHTUNG SOWIE MILCHAUFSCHÄUMVERFAHREN**
MILK FOAMING DEVICE AND A MILK FOAMING METHOD
DISPOSITIF DE MOUSSAGE DE LAIT AINSI QUE PROCÉDÉ DE MOUSSAGE DE LAIT

(30) Priorität: 14.07.2015 DE 102015111406
(43) Veröffentlichungstag der Anmeldung: 23.05.2018
(73) Patentinhaber: Eugster/Frismag AG, 8580 Amriswil (CH)
(72) Erfinder: FISCHER, Daniel, 8590 Romanshorn (CH)
(74) Vertreter: Patentanwälte Behrmann Wagner PartG mbB
(86) Internationale Anmeldenummer: PCT/EP2016/051422
(87) Internationale Veröffentlichungsnummer: WO 2017/008919

(56) Entgegenhaltungen:
- EP-A1- 1 472 963
- EP-A1- 2 229 853
- EP-A2- 2 397 219
- WO-A1-2012/049597
- DE-U1-202011 110 158

## Beschreibung

Die Erfindung betrifft eine Milchaufschäumvorrichtung gemäß dem Oberbegriff des Anspruchs 1, mit einem einen Vorratsraum für Milch begrenzenden Behälter und mit einem elektromotorisch rotierbaren Aufschäumelement zum Aufschäumen der Milch, wobei dem Vorratsraum eine, bevorzugt obere, Einfüllöffnung zum, bevorzugt manuellen, Einfüllen von Milch zugeordnet ist. Ferner betrifft die Erfindung ein Aufschäumverfahren gemäß dem Oberbegriff des Anspruchs 14 zum Aufschäumen von Milch, insbesondere mit einer erfindungsgemäßen Milchaufschäumvorrichtung.

Aus der EP 1 827 188 B1 ist eine Milchaufschäumvorrichtung bekannt, die einen einen Vorratsraum für Milch begrenzenden, oben offenen Behälter aufweist, wobei unmittelbar in dem Vorratsraum ein als Schwingbesen ausgebildetes Aufschäumelement angeordnet ist, mit dem die Milch aufschäumbar ist. Das Aufschäumelement wird über eine Magnetkupplung angetrieben über einen in einer von dem Behälter separaten Station angeordneten Elektromotor. Nachteilig bei dem bekannten Behälter ist, dass der Behälter zum Entleeren in eine Tasse umgeschüttet werden muss, indem man den gesamten Behälter handhabt bzw. kippt. Darüber hinaus scheint die Milchschaumqualität verbesserungswürdig.

Zum weiteren Stand der Technik wird verwiesen auf die EP 2 408 341 B1, die EP 2 198 762 A1 sowie die DE 11 43 462 A.

Ausgehend von dem vorgenannten Stand der Technik liegt der Erfindung die Aufgabe zugrunde eine komfortable handhabbare Milchaufschäumvorrichtung anzugeben, mit der ein Einfüllen von Milchschaum in ein Trinkbehältnis ohne Kippen des gesamten Behälters möglich ist. Bevorzugt soll sich die Milchaufschäumvorrichtung durch eine verbesserte Milchschaumqualität auszeichnen. Ferner besteht die Aufgabe darin, ein entsprechend verbessertes Milchaufschäumverfahren anzugeben, welches ein Kippen eines Milchbehälters zum Einfüllen von erzeugtem Milchschaum in ein Trinkbehältnis nicht mehr notwendig macht.

Diese Aufgabe wird hinsichtlich der Milchaufschäumvorrichtung mit den Merkmalen des Anspruchs 1 gelöst.

Hinsichtlich des Aufschäumverfahrens wird die Aufgabe mit den Merkmalen des Anspruchs 12 gelöst, d.h. bei einem gattungsgemäßen Verfahren dadurch, dass die (aufzuschäumende) Milch in einen von einem Behälter begrenzten Vorratsraum gefüllt wird und diese Milch durch Rotieren eines als Förderrotor ausgebildeten Aufschäumelementes aufgeschäumt und der entstehende Milchschaum durch die Rotation des Förderrotors durch eine, bevorzugt als Steigleitung ausgebildete Milchschaumleitung zu einem Auslass (hin zu einem Trinkgefäß) gefördert wird.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, dem Aufschäumelement eine Doppelfunktion zukommen zu lassen, indem das Aufschäumelement durch dessen Rotation nicht nur Milch aus dem Vorratsraum des Behälters aufschäumt, sondern gleichzeitig die aufgeschäumte Milch, d.h. den Milchschaum durch eine bevorzugt als Steigleitung ausgebildete Milchschaumleitung (Förderleitung) der Milchaufschäumvorrichtung zu einem Auslass in Richtung eines Trinkbehälters fördert. Anders ausgedrückt wird mit dem Aufschäumelement nicht nur Milch aufgeschäumt, sondern die aufgeschäumte Milch durch eine, bevorzugt als Steigrohr ausgebildete Milchschaumleitung gefördert, so dass im Ergebnis ein Kippen des Behälters zum Auffüllen eines Trinkbehältnisses mit Milchschaum nicht notwendig ist. Bei einer erfindungsgemäßen Milchaufschäumvorrichtung hat das als Förderrotor ausgebildete Aufschäumelement somit die Funktion eines Flügelrades einer Milchpumpe, durch dessen Rotation zum einen die Milch aufgeschäumt und zum anderen der Milchschaum durch eine Milchschaumleitung zu einem Auslass gefördert wird, so dass die Funktionen Aufschäumen und Milchfördern von ein und demselben Element, nämlich dem als Förderrotor ausgebildeten Aufschäumelement übernommen werden. Bevorzugt wird der Förderrotor mit einer Drehzahl aus einem Wertebereich zwischen 500 U/min und 8000 U/min, ganz besonders bevorzugt zwischen 1500 U/min und 4000 U/min um eine Rotationsachse rotiert, um zum einen das Aufschäumverhalten und zum anderen die Förderleistung zu optieren. Als besonders zweckmäßig hat es sich herausgestellt, wenn der Förderrotor einen Durchmesser aus einem Wertebereich zwischen 10 mm und 35 mm, vorzugsweise zwischen 18 mm und 25 mm aufweist. Bevorzugt beträgt die Förderleitung des Förderrotors bezogen auf Milchschaum zwischen 0,1 l/min und 0,8 l/min.

Als besonders zweckmäßig hat es sich herausgestellt, wenn der Förderrotor als Flügelrad ausgebildet ist, wie diese bei Flügelradpumpen, insbesondere Axial- oder Radialpumpen zum Einsatz kommen. Hierzu umfasst das Flügelrad bevorzugt mehrere in Umfangsrichtung benachbarte Flügel zum Aufschäumen und Beschleunigen der Milch bzw. des Milchschaums in die Milchschaumleitung hinein.

Zur Optimierung der Milchschaumqualität ist erfindungsgemäß vorgesehen, dass dem Förderrotor mindestens eine Luftleitung zum Ansaugen von Luft, insbesondere durch die Rotation des Förderrotors, bevorzugt ausschließlich durch diese, zugeordnet ist. Wie später noch erläutert werden wird, mündet die Luftleitung bevorzugt in eine den Förderrotor zumindest abschnittsweise umschließenden Aufschäumkammer oder in eine Fluidverbindung zwischen der Aufschäumkammer und dem ein größeres Volumen als die Aufschäumkammer aufweisenden, von dem Behälter begrenzten Vorratsraum. Im Hinblick auf die Anordnung der Luftleitung gibt es unterschiedliche Möglichkeiten. So ist es beispielsweise denkbar, die Luftleitung ausgehend von einem Umgebungsbereich des Förderrotors nach oben zu führen, insbesondere ist in einem Bereich eines Behälterrandes oder darüber, jedenfalls bevorzugt in einem Bereich oberhalb eines maximalen bzw. zulässigen Milchfüllstandes in dem von dem Behälter begrenzten Vorratsraum, um somit einen Lufteintritt (und bevorzugt keinen Milcheintritt) sicherzustellen. Zusätzlich oder alternativ kann eine Luftleitung auch nach unten, zu einer Behälterunterseite geführt und/oder dort angeordnet sein. Auch ist es denkbar zusätzlich oder alternativ eine Luftleitung in radialer Richtung nach außen zu führen, insbesondere in einer Umfangswand des Behälters anzuordnen oder die Umfangswand zu durchsetzen. Für den Fall der seitlichen bzw. radialen Ausmündung der Luftleitung nach außen oder des Ausmündens der Luftleitung nach unten aus dem Behälter kann dieser in Weiterbildung der Erfindung ein selbstständig schaltendes Rückschlagventil zugeordnet sein, welches bei Rotation des Förderrotors zum Ansaugen von Luft öffnet und bei nachlassender Drehzahl oder abgeschaltetem Förderrotor die Luftleitung verschließt, um einen Milchaustritt aus der Luftleitung nach außen zu verhindern.

Erfindungsgemäß ist der Förderrotor zumindest abschnittsweise, bevorzugt vollständig, in einer fluidleitend mit dem Vorratsraum verbundenen, insbesondere in dem Behälter mit Abstand zu einer Behälteroberseite angeordneten Aufschäumkammer angeordnet, aus der die Milchschaumleitung ausmündet. Durch die Anordnung des Förderrotors in einer gegenüber dem Vorratsraum baulich abgegrenzten Aufschäumkammer kann die Milchschaumqualität gesteigert und die Fördereigenschaft des Förderrotors verbessert werden; letzteres insbesondere aufgrund der zusätzlichen Nutzung der Volumenzunahme des Milchschaums verglichen mit der Milch zur Förderung des Milchschaums durch die Förderleitung. Anders ausgedrückt kann durch das Vorsehen einer zumindest abschnittsweise, vorzugsweise vollständig den Förderrotor aufnehmenden Aufschäumkammer der Schaum bzw. dessen Volumenzunahme besser kanalisiert werden und trägt somit neben der Rotationsbewegung des Förderrotors zur Förderung des Milchschaum über die bevorzugt als Steigrohr ausgebildete Milchschaumleitung in Richtung Trinkbehältnis bei. Bevorzugt ist es dabei, wenn die Milchschaumleitung aus einer ansonsten bevorzugt geschlossenen Oberseite der Aufschäumkammer ausmündet.

Besonders zweckmäßig ist es, wenn die Aufschäumkammer durch Rotation des Förderrotors mit Milch aus dem Vorratsraum versorgbar ist, was dadurch realisierbar ist, das die Aufschäumkammer mit einer als Saugleitung bzw. Saugkanal fungierenden fluidleitenden Verbindung mit dem Vorratsraum verbunden ist. Bevorzugt mündet diese fluidleitende Verbindung von unten her, jedenfalls von unterhalb eines Milchschaumleitungseingangs her, vorzugsweise von unterhalb des Förderrotors her in die Aufschäumkammer.

Im Hinblick auf die konkrete Realisierung der Aufschäumkammer ist es von Vorteil, wenn die Aufschäumkammer von einem im Behälter, und insbesondere in einem unteren Behälterbereich angeordneten Gehäuse begrenzt ist, das das Aufschäumkammervolumen von dem Vorratsraumvolumen trennt, wobei der Gehäuseinnenraum, d.h. die Aufschäumkammer und der Vorratsraum über die vorgenannte fluidleitende Verbindung miteinander verbunden sind.

Besonders zweckmäßig ist es, wenn die Kombination aus dem vorgenannten Gehäuse der Aufschäumkammer und dem darin angeordneten Förderrotor eine Axialpumpe oder eine Radialpumpe bilden, also eine Pumpe, die den Milchschaum in radialer Richtung nach außen und dann bevorzugt in axialer Richtung nach oben oder unmittelbar in axialer Richtung nach oben in Richtung Auslass der Milchschaumleitung fördert.

Wie erwähnt, ist es besonders zweckmäßig, wenn die Aufschäumkammer in einem unteren Bereich des Behälters angeordnet ist und/oder von einer Unterseite her mit Milch aus dem Vorratsraum über die fluidleitende Verbindung versorgbar ist, wobei es besonders bevorzugt ist, wenn der Einlass der fluidleitenden Verbindung in die Aufschäumkammer von einer Einlassöffnung in die Milchschaumleitung über den Förderrotor beabstandet ist.

Erfindungsgemäß mündet die Luftleitung zur Zuführung von Luft zum Aufschäumprozess in die Aufschäumkammer und/oder in die fluidleitende Verbindung zwischen dem Vorratsraum und der Aufschäumkammer. Hierdurch kann gezielt der Aufschäumkammer die Luft zugeführt werden.

Von besonderem Vorteil ist eine Ausführungsform der Milchaufschäumvorrichtung, bei dem diese zum Herstellen von warmem oder heißem Milchschaum Heizmittel zum Erwärmen der Milch aufweist. Dabei ist es besonders zweckmäßig, wenn die Heizmittel unmittelbar der Aufschäumkammer zugeordnet sind, so dass zumindest in erster Linie die in der Aufschäumkammer vorhandene Milch erwärmt wird, und die im Vorratsraum befindliche Milch nur indirekt oder weniger stark. Dies kann beispielsweise dadurch realisiert werden, dass die Heizmittel in der Aufschäumkammer angeordnet sind und/oder diese zumindest abschnittsweise umschließen. Zusätzlich oder alternativ ist es möglich, dass die Heizmittel in dem vorerwähnten Gehäuse der Aufschäumkammer integriert sind oder von dem Gehäuse der Aufschäumkammer radial außen umschlossen sind, wobei auch grundsätzlich möglich ist die Heizmittel dem Vorratsraum zuzuordnen.

Im Hinblick auf die konkrete Ausgestaltung der Heizmittel gibt es unterschiedliche Möglichkeiten. Die Heizmittel können beispielsweise ein induktives Heizelement aufweisen oder als Mikrowellenheizmittel ausgebildet sein. Auch ist die Ausbildung der Heizmittel als Widerstandsheizung möglich. Zusätzlich oder alternativ können die Heizmittel die Milch mit Wasserdampf beheizend ausgebildet sein, wobei in diesem Fall die Heizmittel einen Dampferzeuger umfassen, der im Behälter selbst angeordnet sein kann, jedoch bevorzugt in einer später noch zu erläuternden, fakultativen Station angeordnet ist, an die der Behälter lösbar andockbar ist, und insbesondere um den Förderrotor anzutreiben.

Besonders zweckmäßig ist es, wenn die Milchaufschäumvorrichtung mehrteilig ausgebildet ist bzw. mindestens zwei Funktionsteile aufweist, nämlich den vorerwähnten Behälter mit dem Aufschäumelement und der Milchschaumleitung sowie eine Station (Andockstation) auf/oder an der der Behälter abstellbar ist, wobei die Station den elektromotorischen Antrieb zum rotierenden Antreiben des Förderrotors umfasst, wobei das Drehmoment zwischen Elektromotor und Förderrotor mittels einer Kupplung übertragbar ist, wobei sich das angetriebene Kupplungsteil in der Station und das abtreibende Kupplungsteil am Behälter angeordnet ist. Bevorzugt ist die Kupplung dabei als Magnetkupplung ausgebildet, also als berührungslos antreibende Kupplung. Durch Abstellen des Behälters auf oder an der Station erfolgt bevorzugt automatisch eine Verbindung der Kupplungsteile zur Drehmomentübertragung. Besonders bevorzugt ist es, wenn die Station neben dem elektromotorischen Antrieb für den Förderrotor auch einen elektrischen Anschluss zum Versorgen der Heizmittel mit elektrischer Energie und/oder einen Dampfanschluss sowie Dampferzeugungsmittel zum Versorgen der Heizmittel mit Energie bei auf oder an der Station angeordnetem Behälter aufweist.

Wie bereits angedeutet ist es besonders zweckmäßig, wenn die Milchschaumleitung als Steigleitung ausgebildet ist, also sich ausgehend von einer Einmündungsöffnung in der Hochrichtung des Behälters erstreckt, wobei es besonders zweckmäßig ist, wenn sich die Förderleitung über mindestens 50%, weiter bevorzugt über mindestens 75% der Hocherstreckung des Behälters und/oder des von diesem begrenzten Vorratsraums erstreckt. Bevorzugt durchsetzt die Steigleitung die Einfüllöffnung oder ist seitlich an dieser in eine Richtung nach oben vorbeigeführt.

Die Erfindung führt auch auf ein Verfahren zum Aufschäumen von Milch, wobei zunächst die aufzuschäumende Milch in einen von einem Behälter begrenzten Vorratsraum gefüllt wird und die Milch durch Rotieren eines als Förderrotor ausgebildeten Aufschäumelementes aufgeschäumt und der entstehende Milchschaum durch die Rotation des Förderrotors durch eine, bevorzugt als Steigleitung ausgebildete Milchschaumleitung zu einem Auslass gefördert wird.

Besonders bevorzugt ist, wenn vor und/oder während des Aufschäumvorgangs die Milch erwärmt wird, insbesondere aus einer Temperatur aus einem Wertebereich zwischen 40 °C und 80 °C, bevorzugt zwischen 55 °C und 70°C.

Alternativ ist es auch möglich, mit der erfindungsgemäßen Milchaufschäumvorrichtung kalte Milch zu verarbeiten, insbesondere mit dem Förderrotor aufzuschäumen und mit diesem zum Auslass zu fördern. Hierzu ist es möglich, etwaige vorhandene Heizmittel auszuschalten oder mit geringer Leistung zu betreiben oder die Milchaufschäumvorrichtung von vornherein heizmittelfrei auszugestalten.

Weitere Vorteile, Merkmale und Einzelheiten der Erfindung ergeben sich aus der nachfolgenden Beschreibung eines bevorzugten Ausführungsbeispiels sowie anhand der Zeichnungen.

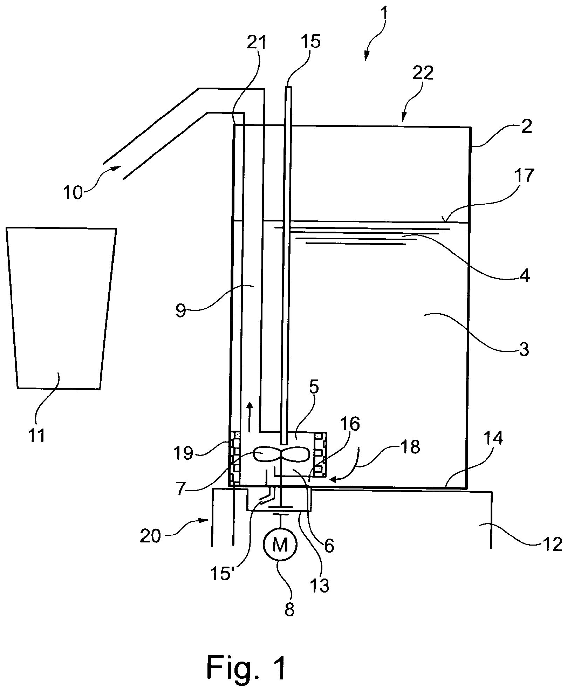

Diese zeigen in der einzigen Fig.1 eine schematisierte Darstellung einer bevorzugten Ausführungsform einer erfindungsgemäßen Milchaufschäumvorrichtung.

In Fig. 1 ist eine Milchaufschäumvorrichtung 1 gezeigt. Diese umfasst einen Behälter 2, der in seinem Inneren einen Vorratsraum 3 für aufzuschäumende Milch 4 begrenzt, in den Milch durch eine obere, offene Einfüllöffnung 22 manuell eingefüllt werden kann.

In einem unteren Bereich des Behälters 2 ist innerhalb einer von einem Gehäuse 5 begrenzten Aufschäumkammer 6 ein als Förderrotor 7, in dem konkreten Ausführungsbeispiel als Flügelrad, ausgebildetes Aufschäumelement angeordnet, welches mithilfe eines Elektromotors 8 antreibbar ist. Durch Rotation des Förderrotors 7 um seine Rotationsachse wird Milch innerhalb der Aufschäumkammer 6 aufgeschäumt und durch eine als Steigleitung ausgebildete Milchschaumleitung 9, die aus der Aufschäumkammer 6 ausmündet und in vertikaler Richtung nach oben ansteigt, hin zu einem Auslass 10 gefördert und gelangt durch diesen hindurch in ein unterhalb des Auslasses 10 platziertes Trinkgefäß 11.

Aus Fig. 1 ist zu erkennen, dass sich der Elektromotor 8 nicht innerhalb des Behälters 2 befindet, was grundsätzlich alternativ realisierbar ist. Bevorzugt befindet sich der Elektromotor 8 in einer von dem Behälter separaten Station 12 (Andockstation), auf der der Behälter 2 abstellbar ist. Die Drehmomentübertragung vom Elektromotor 8 auf den Förderrotor 7 erfolgt über eine berührungslos arbeitende Kupplung 13, hier eine Magnetkupplung, deren elektromotorisch angetriebenes Kupplungsteil (Primärseite) in der Station 12 angeordnet ist und deren abtreibendes Kupplungsteil auf der Sekundärseite behälterseitig angeordnet ist.

Aus Fig. 1 ist zu erkennen, dass, wie erwähnt, die Aufschäumkammer 6 in einem unteren Bereich des Behälters 2, also in der Nähe eines Bodens 14 des Behälters 2 angeordnet ist und über eine Luftleitung 15, 15' mit Luft versorgbar ist, wobei die Luft durch die Rotation des Aufschäumelementes 7 angesaugt werden kann. In dem Ausführungsbeispiel sind lediglich zu Verdeutlichungszwecken zwei Luftleitungen 15, 15' eingezeichnet, wobei eine einzige Luftleitung 15 oder 15' ausreicht. Die Darstellung dient nur zur Erläuterung, dass die Luftleitung 15 bzw. 15' aus unterschiedlichen Richtungen eingeführt sein kann. Die mit dem Bezugszeichen 15' bezeichnete Luftleitung mündet nicht unmittelbar in die Aufschäumkammer 6, was alternativ möglich ist, sondern in eine fluidleitende Verbindung 16, über die Milch aus dem Vorratsraum 3 in die Aufschäumkammer 6 strömen bzw. durch Rotation des Förderrotors 7 angesaugt werden kann. Diese Luftleitung 15' ist bevorzugt mit einem Rückschlagventil zum Verhindern eines Milchaustrittes versehen. Ein solches Rückschlagventil ist grundsätzlich auch bei der Luftleitung 15 einsetzbar, hier jedoch nicht zwingend notwendig, da die Luftleitung 15 über einen maximalen Füllstand 17 von Milch herausgeführt ist, so dass nicht die Gefahr eines Ansaugens von Milch bzw. eines nicht Ansaugens von Luft besteht.

Zu erkennen ist weiter, dass die fluidleitende Verbindung 16 von unten her in die Aufschäumkammer 6 geführt ist, um möglichst keine oder nur geringe Restmengen bzw. nicht aufschäumbare Milchmengen zu erhalten. Die Milch 4 strömt also, angedeutet durch den Pfeil 18 entlang einer Unterseite der Aufschäumkammer 6 und von unten in diese hinein, wird dann von dem rotierenden Förderrotor 7 unter gleichzeitiger Ansaugung von Luft aufgeschäumt und durch die Rotationsbewegung des Förderrotors 7 in Kombination mit der aus dem Aufschäumvorgang resultierenden Volumenvergrößerung durch die Milchschaumleitung 9 nach oben in Richtung Trinkgefäß 11 gefördert.

Aus Fig. 1 ergibt sich weiterhin, dass der Aufschäumkammer 6 hier beispielhaft elektrische Heizmittel 19 zugeordnet sind, die die Milch 4 und den Milchschaum innerhalb der Aufschäumkammer 6 erwärmen. Versorgt werden die Heizmittel 19 mit Energie von der Station 12, hier beispielsweise über eine elektrische Schnittstelle 20, wenn sich der Behälter 2 auf der Station 12 befindet.

Die Kombination aus Gehäuse 5 bzw. von diesem begrenzter Aufschäumkammer 6 und Förderrotor 7 bildet eine Pumpe, genauer eine Flügelradpumpe, die Milch 4, hier beispielhaft aus axialer Richtung von unten angesaugt und in axialer Richtung den hergestellten Milchschaum fördert. Zusätzlich Förder- oder Aufschäummittel benötigt die erfindungsgemäße Milchaufschäumvorrichtung 1 nicht. Eine Entleerung des Behälters 2 ist möglich, ohne diesen zu bewegen, da der Milchschaum durch die Milchschaumleitung 9 gefördert wird, welche, was bevorzugt ist, über einen oberen Rand 21 des Behälters 2 in radialer Richtung nach außen geführt ist.

### Bezugszeichen

- 1: Milchaufschäumvorrichtung
- 2: Behälter
- 3: Vorratsraum
- 4: Milch
- 5: Gehäuse
- 6: Aufschäumkammer
- 7: Förderrotor
- 8: Elektromotor
- 9: Milchschaumleitung
- 10: Auslass
- 11: Trinkgefäß
- 12: Station (Andockstation)
- 13: Kupplung
- 14: Boden
- 15: Luftleitung
- 15': Luftleitung
- 16: fluidleitende Verbindung
- 17: maximaler Milch-Füllstand
- 18: Pfeil (Milchfluss)
- 19: Heizmittel
- 20: elektrische Schnittstelle
- 21: oberer Behälterrand
- 22: Einfüllöffnung

## Patentansprüche

1. Milchaufschäumvorrichtung (1) mit einem einen Vorratsraum (3) für Milch (4) begrenzenden Behälter (2) und mit einem elektromotorisch rotierbaren Aufschäumelement mit der Funktion zum Aufschäumen der Milch (4) durch Rotation des Aufschäumelements, wobei dem Vorratsraum eine Einfüllöffnung (22) zugeordnet ist,
**dadurch gekennzeichnet,**
**dass** das Aufschäumelement als Förderrotor (7) ausgebildet ist, mit der Funktion durch dessen Rotation die durch Rotation des Förderrotors (7) aufgeschäumte Milch (4) durch eine, bevorzugt als Steigleitung ausgebildete, Milchschaumleitung (9) der Milchaufschäumvorrichtung (1) zu einem Auslass (10) zu fördern, und dass der Förderrotor (7) zumindest abschnittsweise, bevorzugt vollständig, in einer fluidleitend mit dem Vorratsraum (3) verbundenen Aufschäumkammer (6) angeordnet ist, aus der die Milchschaumleitung (9) ausmündet, und dass dem Förderrotor (7) mindestens eine Luftleitung (15, 15') zum Ansaugen von Luft, insbesondere durch die Rotation des Förderrotors (7) zugeordnet ist, und dass die Luftleitung (15, 15') in die Aufschäumkammer (16) oder die fluidleitende Verbindung (16) zwischen dem Vorratsraum (3) und der Aufschäumkammer (6) einmündet.

2. Milchaufschäumvorrichtung nach Anspruch 1,
**dadurch gekennzeichnet,**
**dass** der Förderrotor (7) als Flügelrad umfassend mehrere in Umfangsrichtung benachbarte Flügel ausgebildet ist.

3. Milchaufschäumvorrichtung nach einem der vorhergehenden Ansprüche,
**dadurch gekennzeichnet,**
**dass** die Aufschäumkammer (6) in dem Behälter (2) angeordneten ist.

4. Milchaufschäumvorrichtung nach einem der vorhergehenden Ansprüche,
**dadurch gekennzeichnet,**
**dass** die Aufschäumkammer (6) derart fluidleitend mit dem Förderraum verbunden ist, dass Milch (4) durch Rotation des Förderrotors (7) aus dem Vorratsraum (3) in die Aufschäumkammer (6) ansaugbar ist.

5. Milchaufschäumvorrichtung nach einem der vorhergehenden Ansprüche,
**dadurch gekennzeichnet,**
**dass** die Aufschäumkammer (6) von einem im Behälter (2) angeordneten Gehäuse (5) von dem Vorratsraum (3) getrennt ist.

6. Milchaufschäumvorrichtung nach Anspruch 5,
**dadurch gekennzeichnet,**
**dass** Gehäuse (5) und Förderrotor (7) eine Axialpumpe oder eine Radialpumpe bilden.

7. Milchaufschäumvorrichtung nach einem der vorhergehenden Ansprüche,
**dadurch gekennzeichnet,**
**dass** die Aufschäumkammer (6) in einem unteren Bereich des Behälters (2) angeordnet ist und/oder von einer Unterseite her mit Milch (4) aus dem Vorratsraum (3) über die fluidleitende Verbindung (16) versorgbar.

8. Milchaufschäumvorrichtung nach einem der vorhergehenden Ansprüche,
**dadurch gekennzeichnet,**
**dass** Heizmittel (19) zum Erwärmen der Milch (4) vorgesehen sind, wobei die Heizmittel (19) bevorzugt der Aufschäumkammer (6) zugeordnet sind, bevorzugt in dem sie in der Aufschäumkammer (6) angeordnet sind und/oder diese zumindest abschnittsweise umschließen und/oder in einem Gehäuse (5) der Aufschäumkammer (6) integriert oder von dem Gehäuse (5) der Aufschäumkammer (6) umschlossen sind.

9. Milchaufschäumvorrichtung nach einem der vorhergehenden Ansprüche,
**dadurch gekennzeichnet,**
**dass** die Milchaufschäumvorrichtung (1) eine einen elektromotorischen Antriebsmotor aufweisende Station (12) umfasst, auf und/oder an der der Behälter (2) mit Förderrotor (7) lösbar abstellbar ist und dass Kupplungsmittel, insbesondere eine Magnetkupplung zum Übertragen eines Antriebsdrehmomentes von dem Elektromotor (8) zum Förderrotor (7) vorgesehen sind.

10. Milchaufschäumvorrichtung nach Anspruch 9,
**dadurch gekennzeichnet,**
**dass** die Station (12) einen elektrischen Anschluss zum Versorgen der Heizmittel (19) mit elektrischer Energie und/oder einen Dampfanschluss sowie Dampferzeugungsmittel zum Versorgen der Heizmittel (19) Dampf bei auf und/oder an der Station abgestelltem Behälter (2) aufweist.

11. Milchaufschäumvorrichtung nach einem der vorhergehenden Ansprüche,
**dadurch gekennzeichnet,**
**dass** sich die Förderleitung in Richtung einer Hocherstreckung des Behälters (2) erstreckt, bevorzugt über mindestens 50%, weiter bevorzugt mindestens 75% der Hocherstreckung des Behälters (2) und/oder des von diesem begrenzten Vorratsraums (3).

12. Verfahren zum Aufschäumen von Milch (4) mit einer Milchaufschäumvorrichtung (1) nach einem der vorhergehenden Ansprüche,
**dadurch gekennzeichnet,**
**dass** Milch (4) in einen von einem Behälter (2) begrenzten Vorratsraum (3) gefüllt wird und diese Milch (4) durch Rotieren eines als Förderrotor (7) ausgebildeten Aufschäumelementes in der dem Förderrotor (7) zumindest abschnittsweise aufnehmenden Aufschäumkammer aufgeschäumt und der entstehende Milchschaum durch die Rotation des Förderrotors (7) durch eine, bevorzugt als Steigleitung ausgebildete, Milchschaumleitung (9) zu einem Auslass (10) gefördert wird.

## Claims

1. A milk frothing apparatus (1) having a container (2) which delimits a supply space (3) for milk (4), and having a frothing element which can be rotated by electric motor with the function of frothing the milk (4) by way of rotation of the frothing element, the supply space being assigned a filling opening (22),
**characterized in that**
the frothing element is configured as a feed rotor (7), with the function of conveying, by way of its rotation, the milk which was frothed by the rotation of the feed rotor (7) to an outlet (10) through a milk froth line (9) of the milk frothing apparatus (1), the milk froth line preferably being configured as a riser, and that the feed rotor (7) is arranged at least in sections, preferably completely, in a frothing chamber (6) which is connected in a fluid-conducting manner to the supply space (3), from which frothing chamber (6) the milk froth line (9) opens, and that the feed rotor (7) is assigned at least one airline (15, 15') for sucking in air by way of the rotation of the feed rotor (7), and that the air line (15, 15') opens into the frothing chamber (16) or the fluid-conducting connection (16) between the supply space (3) and the frothing chamber (6).

2. The milk frothing apparatus according to claim 1,
**characterized in that**
the feed rotor (7) is configured as an impeller wheel comprising a plurality of blades which are adjacent in the circumferential direction.

3. The milk frothing apparatus according to any one of the preceding claims,
**characterized in that**
the frothing chamber (6) is arranged in the container (2).

4. The milk frothing apparatus according to any one of the preceding claims,
**characterized in that**
the frothing chamber (6) is connected to the conveying space in a fluid-conducting manner in such a way that milk (4) can be sucked out of the supply space (3) into the frothing chamber (6) by way of rotation of the feed rotor (7).

5. The milk frothing apparatus according to any one of the preceding claims,
**characterized in that**
the frothing chamber (6) is separated from the supply space (3) by a housing (5) which is arranged in the container (2).

6. The milk frothing apparatus according to claim 5,
**characterized in that**
the housing (5) and the feed rotor (7) form an axial pump or a radial pump.

7. The milk frothing apparatus according to any one of the preceding claims,
**characterized in that**
the frothing chamber (6) is arranged in a lower region of the container (2) and/or can be supplied from an underside with milk (4) out of the supply space (3) via the fluid-conducting connection (16).

8. The milk frothing apparatus according to any one of the preceding claims,
**characterized in that**
heating means (19) for heating the milk (4) are provided, the heating means (19) preferably being assigned to the frothing chamber (6), preferably by being arranged in the frothing chamber (6) and/or enclosing said frothing chamber (6) at least in sections and/or being integrated into a housing (5) of the frothing chamber (6) or being enclosed by the housing (5) of the frothing chamber (6).

9. The milk frothing apparatus according to any one of the preceding claims,
**characterized in that**
the milk frothing apparatus (1) comprises a station (12) which has an electric-motor drive motor, and/or on which station (12) the container (2) with the feed rotor (7) can be placed releasably, and that coupling means, in particular a magnetic coupling, for transmitting a drive torque from the electric motor (8) to the feed rotor (7) are provided.

10. The milk frothing apparatus according to claim 19,
**characterized in that**
the station (12) has an electric connector for supplying the heating means (19) with electric energy and/or a steam connector and steam generating means for supplying the heating means (19) with steam when the container (2) is placed on and/or at the station.

11. The milk frothing apparatus according to any one of the preceding claims,
**characterized in that**
the conveying line extends in the direction of a vertical extent of the container (2), preferably across at least 50 %, more preferably at least 75 % of the vertical extent of the container (2) and/or of the supply space (3) which is delimited by said container (2).

12. A method for frothing milk (4) by way of a milk frothing apparatus (1) according to any one of the preceding claims,
**characterized in that**
milk (4) is filled into a supply space (3) which is delimited by a container (2), and said milk (4) is frothed by way of rotation of a frothing element which is configured as a feed rotor (7) in the frothing chamber accommodating the feed rotor (7) at least in sections, and the milk froth which is produced is conveyed by way of the rotation of the feed rotor (7) to an outlet (10) through a milk froth line (9), which is preferably configured as a riser.

## Revendications

1. Dispositif de moussage de lait (1) comprenant un récipient (2) qui entoure un réservoir (3) de lait (4) et comprenant un élément de moussage rotatif à moteur électrique ayant la fonction de faire mousser le lait (4) par la rotation de l'élément de moussage, une ouverture de remplissage (22) étant assignée au réservoir,
**caractérisé en ce que**
l'élément de moussage est configuré comme rotor d'alimentation (7) ayant la fonction de transporter, par sa rotation, le lait moussé par la rotation du rotor d'alimentation (7) vers une sortie (10) à travers une conduite de mousse de lait (9) du dispositif de moussage de lait (1), la conduite de mousse de lait (9) étant de préférence configurée comme colonne montante, et **en ce que** le rotor d'alimentation (7) est disposé au moins en partie, de préférence entièrement, dans une chambre de moussage (6) qui est en communication fluidique avec le réservoir (3) et à partir de laquelle la conduite de mousse de lait (9) débouche, et **en ce qu'**au moins une conduite d'air (15, 15') pour l'aspiration de l'air, notamment par la rotation du rotor d'alimentation (7), est assignée au rotor d'alimentation (7), et **en ce que** la conduite d'air (15, 15') débouche dans la chambre de moussage (16) ou dans la voie de communication fluidique (16) entre le réservoir (3) et la chambre de moussage (6).

2. Dispositif de moussage de lait selon la revendication 1,
**caractérisé en ce que**
le rotor d'alimentation (7) est configuré comme roue à aubes comprenant une pluralité d'aubes adjacentes dans la direction circonférentielle.

3. Dispositif de moussage de lait selon l'une quelconque des revendications précédentes,
**caractérisé en ce que**
la chambre de moussage (6) est disposée dans le récipient (2).

4. Dispositif de moussage de lait selon l'une quelconque des revendications précédentes,
**caractérisé en ce que**
la chambre de moussage (6) est en communication fluidique avec l'espace d'alimentation de telle manière que du lait (4) peut être aspiré à partir du réservoir (3) dans la chambre de moussage (6) par la rotation du rotor d'alimentation (7).

5. Dispositif de moussage de lait selon l'une quelconque des revendications précédentes,
**caractérisé en ce que**
la chambre de moussage (6) est séparée du réservoir (3) par un boîtier (5) disposé dans le récipient (2).

6. Dispositif de moussage de lait selon la revendication 5,
**caractérisé en ce que**
le boîtier (5) et le rotor d'alimentation (7) forment une pompe axiale ou une pompe radiale.

7. Dispositif de moussage de lait selon l'une quelconque des revendications précédentes,
**caractérisé en ce que**
la chambre de moussage (6) est disposée dans une partie inférieure du récipient (2) et/ou peut être alimentée en lait (4) par le bas à partir du réservoir (3) par l'intermédiaire de la voie de communication fluidique (16).

8. Dispositif de moussage de lait selon l'une quelconque des revendications précédentes,
**caractérisé en ce que**
des moyens de chauffage (19) destinés à chauffer le lait (4) sont fournis, les moyens de chauffage (19) étant de préférence assignés à la chambre de moussage (6), de préférence en étant disposés dans la chambre de moussage (6) et/ou entourant la chambre de moussage (6) au moins en partie et/ou étant intégrés dans un boîtier (5) de la chambre de moussage (6) ou étant entourés par le boîtier (5) de la chambre de moussage (6).

9. Dispositif de moussage de lait selon l'une quelconque des revendications précédentes,
**caractérisé en ce que**
le dispositif de moussage de lait (1) comprend une station (12) qui a un moteur électrique d'entraînement et/ou sur laquelle le récipient (2) avec le rotor d'alimentation (7) peut être placé de manière amovible et **en ce que** des moyens de couplage, notamment un accouplement magnétique, destinés à transmettre un couple d'entraînement du moteur électrique (8) au rotor d'alimentation (7) sont fournis.

10. Dispositif de moussage de lait selon la revendication 19,
**caractérisé en ce que**
la station (12) a un raccord électrique pour l'alimentation des moyens de chauffage (19) en énergie électrique et/ou un raccord de vapeur et des moyens de génération de vapeur pour l'alimentation des moyens de chauffage (19) en vapeur quand le récipient (2) est placé sur et/ou à la station.

11. Dispositif de moussage de lait selon l'une quelconque des revendications précédentes,
**caractérisé en ce que**
la conduite d'alimentation s'étend dans la direction d'une hauteur du récipient (2), de préférence par au moins 50 %, de préférence davantage au moins 75 % de la hauteur du récipient (2) et/ou du réservoir (3) entouré par le récipient (2).

12. Procédé de moussage de lait (4) utilisant un dispositif de moussage de lait (1) selon l'une quelconque des revendications précédentes,
**caractérisé en ce**
**qu'**un réservoir (3) entouré par un récipient (2) est rempli de lait (4) et le lait (4) est moussé par la rotation d'un élément de moussage configuré comme rotor d'alimentation (7) dans la chambre de moussage qui loge le rotor d'alimentation (7) au moins en partie et la mousse de lait produite est transportée, par la rotation du rotor d'alimentation (7), vers une sortie (10) à travers une conduite de mousse de lait (9), qui est de préférence configurée comme colonne montante.
